Europäisches Patentamt

European Patent Office

Office européen des brevets

(11) Veröffentlichungsnummer: **0 245 827**

A2

(12) # EUROPÄISCHE PATENTANMELDUNG

(21) Anmeldenummer: 87106826.8

(22) Anmeldetag: 11.05.87

(51) Int. Cl.4: **B29C 45/78** , G05D 23/00 , F28F 27/00

(30) Priorität: 12.05.86 HU 195286

(43) Veröffentlichungstag der Anmeldung: **19.11.87 Patentblatt 87/47**

(84) Benannte Vertragsstaaten: **AT CH DE FR GB IT LI NL SE**

(71) Anmelder: **BRG Mechatronikai Vállalat Polgár u. 8-10 H-1033 Budapest(HU)**

(72) Erfinder: **Garamvölgyi, György Nagy Lajos K. ut 51 H-1148 Budapest(HU)**
Erfinder: **Gergely, Sándor Balint G. ut 8 H-1039 Budapest(HU)**
Erfinder: **Hirmann, Béla Izabella ut 91 H-1064 Budapest(HU)**
Erfinder: **Szücs, Imre Evezös u. 9 H-2131 Göd(HU)**

(74) Vertreter: **Patentanwälte Viering & Jentschura Steinsdorfstrasse 6 D-8000 München 22(DE)**

(54) Vorrichtung zum Einstellen der Temperatur von Geräten, insbesondere Werkzeugen.

(57) Vorrichtung zum Einstellen der Temperatur von Geräten, vorzugsweise Werkzeugen, die eine eine wärmeübertragende Flüssigkeit über einen dazu ausgebildeten Kanal des Gerätes in Strömung versetzende Pumpe (19), einen mit der Flüssigkeit in Kontakt stehenden Heizkörper (18), einen in den Zirkulationskreis eingefügten Wärmetauscher (20), und jeweils einen in einer über diesen Luft strömen lassenden Einlassleitung (6, 4) angeordneten Temperaturfühler (9, 10) aufweist, wobei die Temperaturfühler (9, 10) mit einem Mittelwertbildner (22) verbunden sind. Der Ausgang des Mittelwertbildners (22) ist an einen solchen Differenzbildner (24) angeschlossen, dessen Eingang mit einem Referenzsignalgeber (14) und dessen Ausgang mit dem auf Vorzeichen empfindlichen Eingang jeweils eines Regelungszweiges in Verbindung sind, wobei der eine Regelungszweig die Heizung und der andere die Kühlung steuert.

Die erfindungsgemässe Vorrichtung ist vorzugsweise derart ausgebildet, dass in einem gemeinsamen Konstruktionsgehäuse zwei oder mehrere Heizungs-Kühlungs-Einheiten (11, 12) angeordnet sind.

Fig. 2

## Vorrichtung zum Einstellen der Temperatur von Geräten, insbesondere Werkzeugen

Die Erfindung betrifft eine Vorrichtung zum Einstellen der Temperatur von Geräten, insbesondere Werkzeugen durch Zirkulation einer wärmeübertragenden Flüssigkeit, wobei diese Vorrichtung einen die Flüssigkeit speichernden Behälter, einen mit der Flüssigkeit in Kontakt stehenden Heizkörper, eine die Flüssigkeit durch den Kanal des Gerätes zirkulieren lassende Pumpe, einen die Temperatur der Flüssigkeit messenden Temperaturfühler, eine in die Stromversorgung des Heizkörpers eingreifende und mit dem Temperaturfühler, sowie mit einem die gewünschte Temperatur bestimmenden Referenzsignalgeber verbundene Temperaturregelungseinheit, desweiteren eine die Kühlung des Gerätes sichernde Konstruktionseinheit aufweist, wobei der Referenzsignalgeber mit einem Eingang eines Differenzbildners verbunden ist.

Es ist allgemein bekannt, dass zur Sicherung der entsprechenden Funktion von Spritzgiess-und Pressgiesswerkzeugen, Strangpressen, Mischern usw. dafür gesorgt werden muss, dass die Geräte oder bestimmte Teile derer eine durch die jeweilige Technologie vorgegebene Temperatur aufweisen. Zur Erreichung der erforderlichen Temperatur sind die Geräte zuerst aufzuheizen, dann während des Betriebes sind zur Einhaltung der Temperatur gegebenenfalls Heizung, andernfalls Kühlung erforderlich. Bei der Öffnung des Gerätes (Werkzeuges) tritt infolge der niederen Umgebungstemperatur ein Wärmeverlust auf, bei der Zuführung des Pressgutes dagegen wird das Gerät durch die höhere Temperatur des Materials aufgeheizt. Neben diesen Übergangseffekten tritt ausserdem ein ständiger Wärmeverlust auf, dessen Grösse von dem Temperaturunterschied zwischen der Umgebungstemperatur und der Betriebstemperatur, der Mikroumgebung und einer Reihe anderer Faktoren abhängt. Die Vervollkommnung der Technologien in der Kunststoffindustrie und die ständig steigenden Qualitätsanforderungen an die hergestellten Produkte erfordern nicht nur, dass das Werkzeug die vorgeschriebene Temperatur in immer kleineren Toleranzgrenzen hält, sondern, dass einzelne Teile des Werkzeuges, zum Beispiel der feststehende Teil und der bewegbare Teil, gegebenenfalls innerhalb dieser ein jeweils abgesonderter Bereich auch unter einer voneinander abweichenden Betriebstemperatur betrieben werden soll.

Zur Einhaltung der vorgegebenen Temperatur haben die Konstrukteure der Geräte durch Ausbildung entsprechender Kanäle dafür gesorgt, dass das zur Temperaturregelung verwendete Medium, in den meisten Fällen Öl (in einigen Fällen Wasser) an die entsprechenden Teile des Gerätes gelangen und dort seine Wirkung ausüben kann.

Die Regelung der Temperatur wird mit Hilfe solcher Vorrichtungen gesichert, die eine vorgegebene Flüssigkeitsmenge mit einer bestimmten konstanten Strömungsgeschwindigkeit durch die Kanäle des Gerätes durchströmen lassen. Der Weg der Flüssigkeit führt über den Heizkörper, durch dessen Einschaltung die Flüssigkeit erwärmt wird, in den Flüssigkeitsweg ist weiterhin eine von einer Kühlflüssigkeit durchströmte Rohrschlange eingefügt, mit deren Hilfe die Flüssigkeit kühlbar ist.

Für die Temperaturregelung wird im allgemeinen die Temperatur der aus der Regelungseinrichtung austretenden Flüssigkeit ausgenutzt, und davon ausgehend wird auf die im Innern des Werkzeuges herrschende Temperatur geschlussfolgert. Theoretisch könnte die genaueste Regelung durch an den Körper des Werkzeuges oder Gerätes befestigte Temperaturfühler gesichert werden, zur Anordnung derartiger Temperaturfühler besteht jedoch bei den meisten Werkzeugen keine Möglichkeit, desweiteren ist eine Temperaturregelungseinrichtung sogar je Schicht an mehrere Werkzeuge angeschlossen, wobei die Eichung dieser Einrichtung zu den in diesen angeordneten verschiedenen Temperaturfühlern nur auf komplizierte Weise gelöst werden kann.

In der Praxis hat sich aus diesen Gründen die Anwendung von unmittelbaren (direkten) Temperaturfühlern nicht verbreitet. Die auf der Messung der Temperatur der austretenden Flüssigkeit beruhende Regelung kann die Einstellung der Temperatur des Werkzeuges nur mit einem relativ grossen Fehler sichern.

Bei den Geräten, bei denen verschiedene Teile des Gerätes auf einer verschiedenen Temperatur zu halten sind, hat die Anzahl der an das Gerät anzuschliessenden Temperaturregelungseinrichtungen der Anzahl der auszubildenden verschiedenen Temperaturzonen zu entsprechen. Jede Temperaturregelungseinrichtung ist zur Haltung nur einer einzigen vorgegebenen Temperatur geeignet und ist mit einem Auslass-und einem Rückflussanschluss versehen. Mit den Temperaturregelungsgeräten sind die einzelnen gewünschten Temperaturen individuell einzustellen. Die hier beschriebene Möglichkeit birgt gewisse Gefahren in sich. Sollten die verschiedenen Temperaturen nicht genau eingestellt werden oder eventuell verfehlt werden, können zwischen den verschiedenen zu regelnden Teilen desselben Gerätes überflüssig grosse Temperaturunterschiede entstehen, die zur Ausbildung von inneren Spannungen und zur Verschlechterung der Qualität des Werkzeuges führen. Erfahrungen haben erwiesen, dass es nicht zweckmässig ist, zwischen den verschiedenen Teilen eines durchschnittlichen Werkzeuges einen über ± 20°C liegenden Temperaturunterschied zu halten.

Die obenerwähnten Eigenschaften sind bei den meisten Temperaturreglern der schweizerischen Firma REGLOPLAS AG, so zum Beispiel bei den Erzeugnissen der Typen 15S, 150 KL, 150 aufzufinden. Ausser den erwähnten Eigenschaften kann aus Gesichtspunkten der Wärmetechnik als nachteilig die mittels der in einer geschlossenen Rohrschlange zirkulieren gelassenen Kühlflüssigkeit realisierte Kühlung betrachtet werden, da bei der der Kühlung folgenden Erwärmung auch die in der Rohrschlange befindliche Flüssigkeit erwärmt werden muss, was einen überflüssigen Energieaufwand bedeutet und den Zeitbedarf der Regelung erhöht. Die mit der Erfindung zu lösende grundsätzliche Aufgabe ist die Vervollkommnung der die Temperatur von Geräten regelnden Vorrichtungen, in erster Linie die Verringerung des Toleranzbereiches bei der Einhaltung der gewünschten Temperatur. Die mit der Erfindung zu lösende Aufgabe besteht darüber hinaus in der Schaffung einer in der Praxis leichter verwendaren Vorrichtung, sowie in der Verringerung der Regelungszeitkonstante und in der Minimalisierung der Energieverluste.

Die Erfindung beruht auf der Erkenntnis, dass die tatsächliche Temperatur der Geräte mit dem Durchschnitt der Temperaturen der austretenden und der zurückkehrenden Flüssigkeit angenähert werden kann und dieser Durchschnitt als Grundlage der Temperaturregelung dienen kann. Die Effektivität der auf diese Weise gelösten Regelung kann dadurch weiter erhöht werden, dass die Kühlung nicht mit einer von der Kühlflüssigkeit durchströmten und in dem Weg des Mediums angeordneten Rohrschlange sondern mit einem solchen Wärmetauscher gelöst wird, bei dem die Kühlung durch von einem Ventilator geförderte Luft gesichert wird.

Mit der Erfindung wurde eine Vorrichtung zum Einstellen der Temperatur von Geräten, insbesondere Werkzeugen durch Zirkulation einer wärmeübertragenden Flüssigkeit geschaffen, wobei diese Vorrichtung einen die Flüssigkeit speichernden Behälter, einen mit der Flüssigkeit in Berührung stehenden Heizkörper, eine die Flüssigkeit durch einen dafür ausgebildeten Kanal der Gerätes zirkulieren lassende Pumpe, einen die Temperatur der Flüssigkeit messenden Temperaturfühler und eine in die Stromversorgung des Heizkörpers eingreifende, mit dem Temperaturfühler, sowie mit einem die gewünschte Temperatur bestimmenden Referenzsignalgeber verbundene Temperaturregelungseinheit, desweiteren eine die Kühlung des Gerätes sichernde Konstruktionseinheit aufweist, wobei der Referenzsignalgeber an einem Eingang eines Differenzbildners angeschlossen ist und gemäss der Erfindung in einem die Flüssigkeit in Zirkulation versetzenden geschlossenen Strömungskreis ein Wärmetauscher, der mit einem Ventilator in Verbindung ist, eingefügt ist, dass weiterhin zwei voneinander getrennte die Temperatur der austretenden und zurückkehrenden Flüssigkeit detektierende Temperaturfühler und in der Temperaturregelungseinheit ein anhand der Signale der beiden Temperaturfühler die Temperatur des Gerätes simulierender Mittelwertbildner vorgesehen sind, wobei der Ausgang des Mittelwertbildners mit dem anderen Eingang des Differenzbildners verbunden ist und der Ausgang des Differenzbildners über einen Regelungszweig mit dem Ventilator in Verbindung steht.

Zur Verringerung des Wärmeverlustes ermöglicht der Wärmetauscher eine waagerecht gerichtetet Luftströmung, die senkrecht gerichtete Zirkulation wird durch Verwendung von waagerechten Lamellen behindert.

Es ist vorteilhaft, wenn die eine Seite des Wärmetauschers mit einem sich nach oben erweiternden, oben offenen Trichter und die andere Seite mit einem eine waagerechte Luftströmung erzeugenden Ventilator verbunden sind.

Bei der Temperaturregelung wird der erwähnte Mittelwert (Durchschnittswert) als Grundlage für die Regelung genutzt. Dieser Mittelwert ist jedoch in geringerem Masse beeinflussbar in Kenntnis einiger Erfahrungswerte, sowie der tatsächlichen Umgebungstemperatur.

Bei einer bevorzugten Ausführungsform der Erfindung sind mehrere Heiz-Kühl-Einheiten in einem gemeinsamen Konstruktionsgehäuse angeordnet, wobei jeder dieser jeweils eine Regelungseinheit zugeordnet ist. Bei dieser Ausführungsform ist eine einziges Vorrichtung ausreichend zur Regelung der Temperatur des Werkzeuges, zum Beispiel durch den gleichzeitigen Anschluss des feststehenden Teiles und des beweglichen Teiles.

Die Anwendung von in einem gemeinsamen Gehäuse angeordneten, separaten Regelungseinheiten ermöglicht, dass nur die Temperatur von nur einer Regelungseinheit beliebig einstellbar ist, die weiteren Regelungseinheiten lassen nur die Einstellung einer im Verhältnis zu dieser Temperatur vorgegebenen Differenz, zum Beispiel ±20°C zu. Durch diese Lösung werden subjektive Fehler vermieden und innerhalb eines einzigen Werkzeuges können eine vorgegebene Temperaturdifferenz überschreitende höhere Temperaturdifferenzen nicht auftreten.

Die gemäss der Erfindung ausgebildete Temperaturregelungsvorrichtung ermöglicht ein - schnelleres Erreichen und eine genauere Einhaltung der Betriebstemperatur, ihr Energiebedarf ist geringer, es wird kein Kühlwasseranschluss beansprucht, die Anwendung der erfindungsgemässen Vorrichtung schliesst subjektive Einstellungsfehler aus, die Vorrichtung passt sich den Betriebsbedingungen flexibel an, da der bei den herkömmlichen Vorrichtungen auftretende Bedarf des Anschlusses mehrerer Vorrichtungen an ein einziges Werkzeug nicht besteht.

Nachstehend wird die erfindungsgemäss ausgebildete Temperaturregelungsvorrichtung anhand von Ausführungsbeispielen unter Bezugnahme auf die beigefügte Zeichnung näher erläutert.

In der Zeichnungen zeigen:

Fig. 1 ein Anordnungsschema der erfindungsgemässen Vorrichtung und des daran angeschlossenene zweiteiligen Werkzeuges,

Fig. 2 ein ausführlicheres Konstruktions-und Schaltungsschema der erfindungsgemässen Vorrichtung,

Fig. 3 die Seitenansicht der erfindungsgemässen Vorrichtung in teilweiser Ausbruchsdarstellung,

Fig. 4 eine Vorderansicht der in Fig. 3 veranschaulichten Vorrichtung in teilweiser Ausbruchsdarstellung,

Fig. 5 ein Schnittbild der Kühleinheit der erfindungsgemässen Vorrichtung,

Fig. 6 die erfindungsgemässe Vorrichtung in perspektivischer Darstellung und die Anordnung des daran angeschlossenen zweiteiligen Werkzeuges im Schnitt,

Fig. 7 und Fig. 8 die die Funktion der erfindungsgemässen Vorrichtung veranschaulichenden Heizungs-Kühlungs-Diagramme.

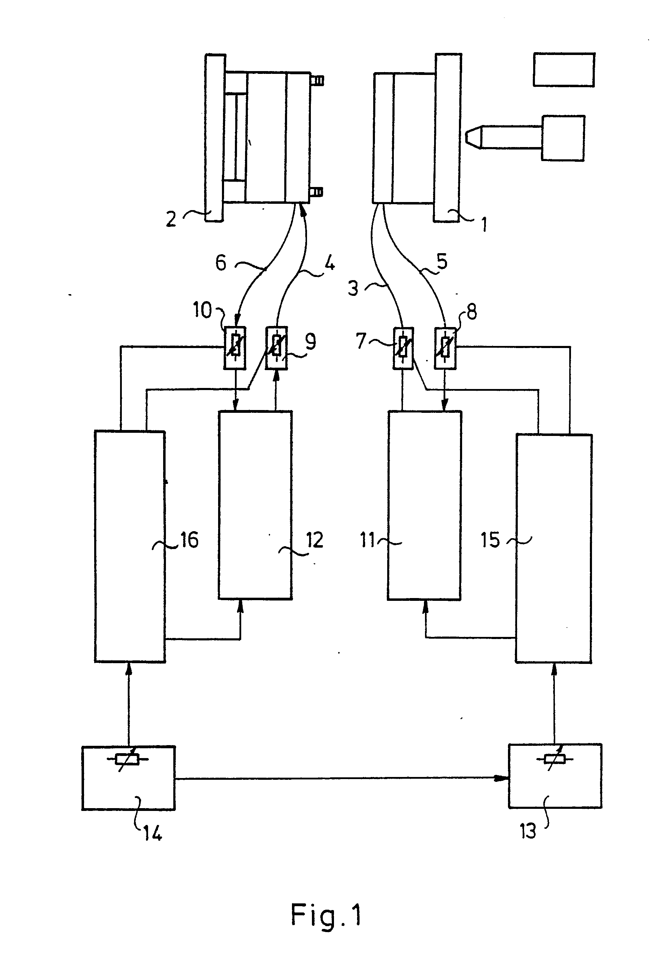

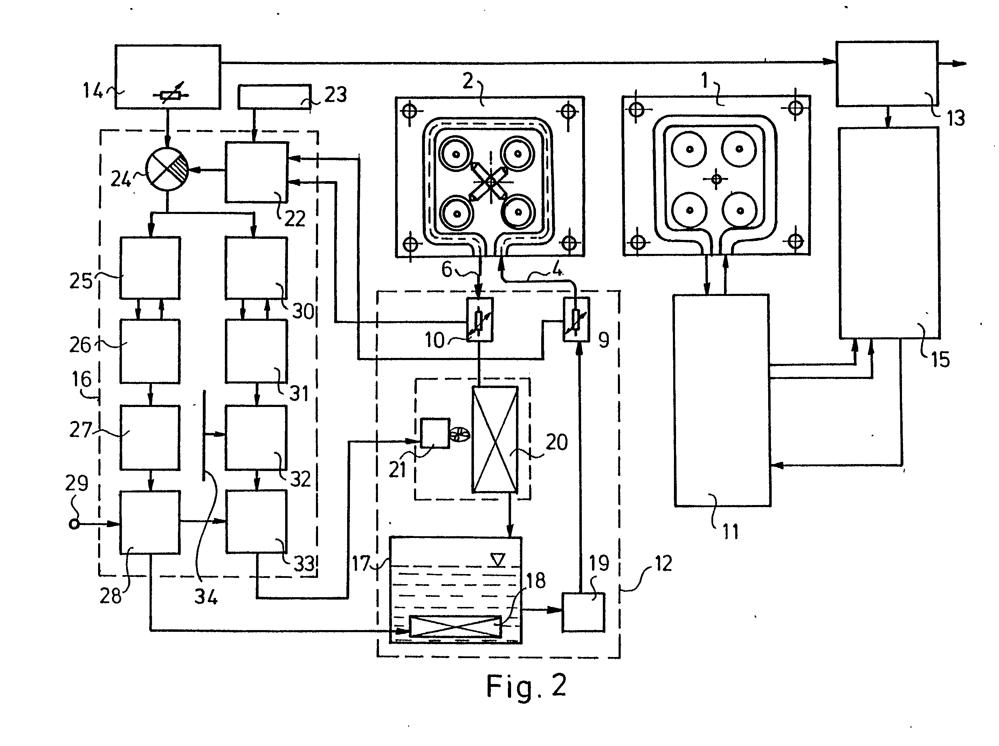

In Fig. 1 ist ein Spritzgiesswerkzeug schematisch angeführt, dessen Temperatur mit der erfindungsgemäss ausgebildeten Vorrichtung auf einen vorgegebenen Wert zu regeln ist. Das Werkzeug besteht aus zwei Teilen, einer feststehenden Seite 1 und einer sich bewegenden Seite 2, in deren Inneren für die zur Heizung bzw. Kühlung verwendete Flüssigkeit Kanäle ausgebildet sind, die über Anschlussstutzen an Einlassleitungen 3 und 4 und an Auslassleitungen 5 und 6 angeschlossen sind. Der Flüssigkeitsweg schliesst sich nach Einfügen von Temperaturfühlern 7, 8 bzw. 9, 10 über je eine gleichausgebildete, einen die erforderliche Heizung und Kühlung der Flüssigkeit sichernden geschlossenen Strömungskreis aufweisende Heizungs-Kühlungseinheit 11, bzw. 12. Die gewünschte Temperatur der feststehenden Seite 1 des Werkzeuges kann mit Hilfe eines Referenzsignalgebers 13 eingestellt werden, während die Temperatur der sich bewegenden Seite 2 des Werkzeuges mittels eines Referenzsignalgebers 14 einstellbar ist. An der Heizungs-Kühlungs-Einheit 11 bzw. 12 ist jeweils eine Regelungseinheit 15 bzw. 16 angeschlossen, welche mit den Referenzsignalgebern 13 bzw. 14 und den Temperaturfühlern 7, 8 bzw. 9, 10 in Verbindung ist. Während des Betriebes kann zwischen den Temperaturen der feststehenden Seite 1 und der sich bewegenden Seite 2 höchstens eine Differenz von 20-25°C sein, deshalb kann von den beiden Referenzsignalgebern 13 und 14 nur der eine von dem anderen unabhängig eingestellt werden. In dem vorliegenden Ausführungsbeispiel empfängt der Referenzsignalgeber 13 das Ausgangssignal des Referenzsignalgebers 14 und der Referenzsignalgeber 13 lässt die Temperatur der die Temperatur der feststehenden Seite 1 einstellenden Regelungseinheit 15 nur in den Grenzen von zum Beispiel ±20°C im Verhältnis zur mit Hilfe der Regelungseinheit 16 einzustellenden Temperatur einstellen. In Fig. 2 wurde die in Fig. 1 dargestellte Anordnung schematisch wiederholt, wobei jedoch auch der innere Aufbau der der sich bewegenden Seite 2 zugeordneten Heizungs-Kühlungs-Einheit 12 und der Regelungseinheit 16 näher veranschaulicht sind. Die feststehende Seite 1 und die sich bewegende Seite 2 des Werkzeuges sind hier vorseiten der Arbeitsfläche dargestellt. Aus der Figur ist gut ersichtlich, dass die vier Nester des Werkzeuges von einem das Heizungs-Kühlungs-Medium aufnehmenden Kanal vollkommen umgeben sind.

In der Heizungs-Kühlungs-Einheit 12 sind ein Ölbehälter 17, an dessen Boden ein Heizkörper 18, eine in die Auslassleitung des Ölbehälters 17 eingefügte Zirkulationspumpe 19, ein in die von dem Werkzeug zurückführende Leitung eingeschalteter Wärmetauscher 20 und ein den Wärmetausch auslösender Ventilator 21 angeordnet. In dem geschlossenen Strömungskreis zirkuliert mit Hilfe der Zirkulationspumpe 19 einem konstanten Strömungsvolumen entsprechend Öl. An den Ein und Austrittsstutzen des Kreises sind in der Figur nicht dargestellte Druckfühler angeordnet, die mit Hilfe entsprechender Sicherheitsschaltungen dafür sorgen, dass die Zirkulation des Öls nur bei zugelassenen Druckverhältnissen erfolgt. Auf ähnliche Weise zeigt ein in dem Ölbehälter 17 angeordneter Pegeldetektor an, wenn der Ölstand einen Wert ausserhalb zugelassener Grenzen annimmt.

Die Regelungseinheit 16 empfängt einerseits das von dem Referenzsignalgeber 14 eingestellte Temperaturreferenzsignal, während ein in der Regelungseinheit 16 angeordneter Mittelwertbildner 22 die Ausströmungs-und Einströmungstemperatursignale der sich bewegenden Seite 2 von den Temperaturfühlern 9, 10, sowie das Signal über die in der Umgebung des Werkzeuges herrschenden Temperatur von einem Temperaturfühler 23 erhält.

Der Ausgang des Referenzsignalgebers 14 und der Ausgang des Mittelwertbildners 22 sind jeweils an je einen Eingang eines Differenzbildners 24 angeschlossen, dessen Ausgang sich in zwei Richtungen verzweigt. Die Zweige sind auf das Vorzeichen des am Ausgang erscheinenden Differenzsignales empfindlich, und von diesen beiden Zweigen funktioniert jeweils nur einer. Der zu dem negativen Vorzeichen gehörende Zweig (d.h. wenn die erforderliche Temperatur unter der tatsächlichen liegt) weist einen Integrator 25, dazu in Kette geschalteten Komparator 26, eine monostabile Kippschaltung 27 und einen durch deren Ausgang gesteuerten Schalter 28 auf, wobei der zuletzt genannte die Netzspannung über einen Netzanschluss 29 an den Heizkörper 18 schaltet. Der zu dem positiven Vorzeichen gehörende Zweig ist ähnlich aufgebaut und weist einen Integrator 30, einen Komparator 31, eine monostabile Kippschaltung 32 und einen gesteuerten Schalter 33 auf, wobei der g esteuerte Schalter 33 mit seinem Ausgang die Funktion des Ventilators 21 steuert.

Die monostabile Kippschaltung 32 ist mit dem Netz synchronisiert, jeder Impulsanfang beginnt bei Nulldurchgang des Netzsignales und sichert jederzeit für den Ventilator 21 ein Signal mit vollständiger Welle. Der Synchronlauf ist in Fig. 2 mit der Linie 34 symbolisch veranschaulicht. Beide Zweige geben mit einer zu der Grösse des Differenzsignales proportionalen Häufigkeit Impulse mit bestimmter Länge an das betätigte Mittel, d.h. an den Heizkörper 18, bzw. den Ventilator 21.

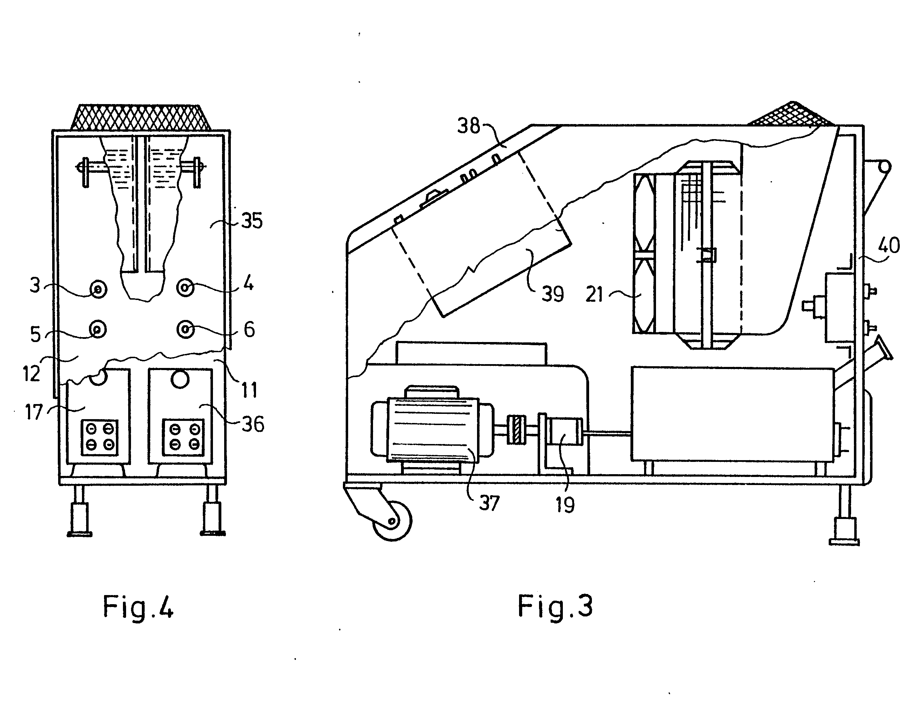

In den Figuren 3 und 4 ist der Konstruktionsaufbau der erfindungsgemässen Vorrichtung veranschaulicht. Die Vorrichtung ist mit einem rollbaren, bzw. in gegebener Lage befestigbaren Konstruktionsgehäuse 35 versehen, in dem zwei gleichförmige Heizungs-Kühlungseinheiten 11, 12 auf die Weise nebeneinander angeordnet sind, dass deren Ölbehälter 17 und 36 unten ist und über dem Ölbehälter 17 der dazugehörige Wärmetauscher 20 mit dem Ventilator 21 und daneben der zu dem Ölbehälter 36 gehörende und in der Figur nicht gesondert angeführte andere Wärmetauscher und Ventilator angeordnet sind. Für den Antrieb der Zirkulationspumpe 19 sorgt der Motor 37. Das Konstruktionsgehäuse 35 ist mit einer schrägen Stirnwand ausgebildet und die elektronischen Einheiten sind in einem darunter ausgebildeten Block angeordnet. Das Konstruktionsgehäuse 35 weist weiterhin eine Hinterwand 40 auf, an welcher die Anschlüsse der Einlassleitungen 3, 4 und der Auslasslei tungen 5, 6 ausgebildet sind.

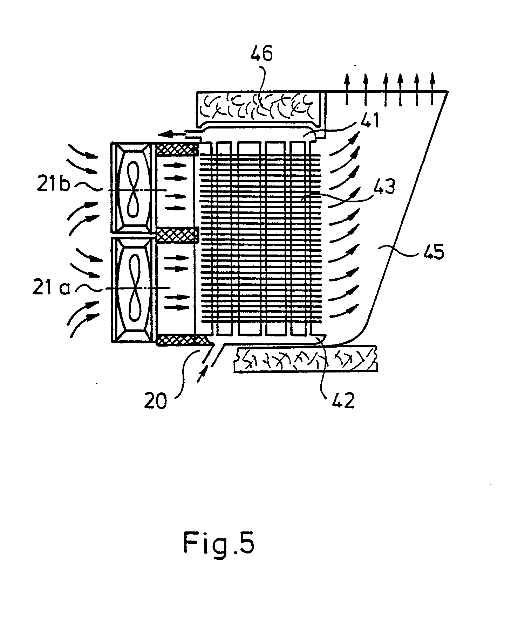

In Fig. 5 ist der Aufbau des Wärmetauschers 20 näher veranschaulicht. Der Wärmetauscher 20 ist für eine waagerechte Luftströmung ausgebildet, d.h. zwischen einem oberen Sammelrohr 41 und einem unteren Sammelrohr 42 sind mehrere vertikale Verbindungsrohre 43 angebracht, auf welche senkrecht eine grosse Anzahl von waagerechten Lamellen befestigt sind. Die Lüftung wird von zwei übereinander angeordneten Ventilatoren 21a und 21b gesichert, welche die Luft zwischen die waagerechten Lamellen 44 strömen lassen. Die ausströmende Luft gelangt in einen sich nach oben erweiternden Trichter 45, der oben offen ausgebildet ist und die luft nach oben ins Freie entweichen lässt. Der Wärmetauscher 20 ist vollkommen von einer Wärmeisolationshülle 46 umgeben.

Die schematisch dargestellte Konstruktionsausbildung ist einerseits deshalb von Vorteil, da in stehendem Zustand der Ventilatoren sich keine natürliche Kühlung ausbilden kann, der Wärmeverlust ist minimal. Der ständige Anschluss des Wärmetauschers 20 verursacht somit im Heizbetrieb keinen bedeutenden Wärmeverlust, bei Einschalten der Ventilatoren beginnt jedoch eine intensive Kühlung. Ein weiterer Vorteil ist darauf zurückzuführen, dass die waagerechte vordere Lufteinsaugung und die senkrechte Ausblasung ermöglichen, dass zwei oder mehrere Einheiten nebeneinander angeordnet werden können.

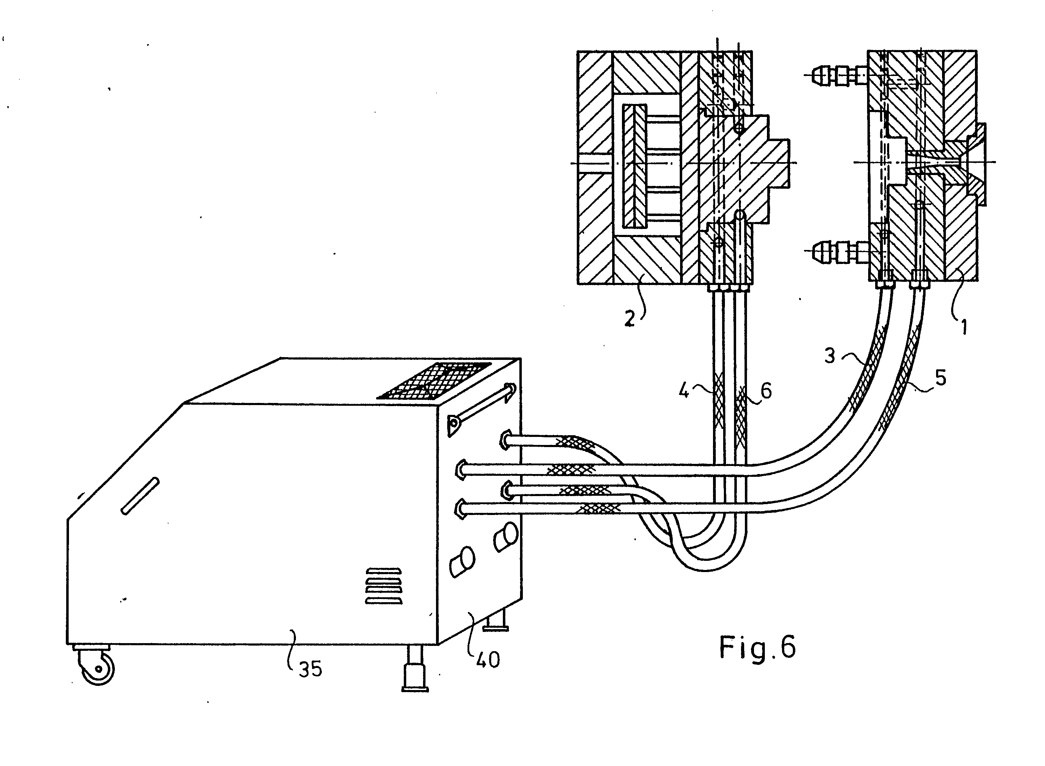

In Fig. 6 sind die erfindungsgemässe Vorrichtung in perspektivischer Ansicht und das daran angeschlossene Spritzgiesswerkzeug gezeigt, wobei das letztere zur besseren Veranschaulichung in vergrössertem Massstab gezeichnet wurde.

Die erfindungsgemässe Vorrichtung funktioniert folgender weise:

Die Temperaturen der feststehenden Seite 1 und der sich bewegenden Seite 2 des Spritzgiesswerkzeuges sind durch die Technologie des Spritzgiessens vorgegeben. Die grundsätzliche Aufgabe der erfindungsgemässen Vorrichtung besteht darin, zu sichern, dass das Werkzeug diese Temperatur bei Inbetriebsetzung so schnell und genau wie möglich erreicht, und während des Spritzgiessens trotz der sich ändernden Wärmebelastung in engen Toleranzgrenzen beibehält.

Anhand der Beschreibung der erfindungsgemässen Vorrichtung ist ersichtlich, dass die Doppelausbildung den Anschluss beider Werkzeugseiten ermöglicht und dass weiterhin der geschlossene Zirkulationskreis des Öls sowohl die Möglichkeit der Heizung als auch die Möglichkeit der Kühlung umfasst.

Die genaue Detektierung der Temperatur des Werkzeuges wird dadurch ermöglicht, dass mittels der Temperaturfühler 7, 8 bzw. 9, 10 sowohl die Temperatur $T_a$ des aus der Vorrichtung austretenden Öls als auch die Temperatur $T_b$ des zurückkehrenden Öls detektiert wird. Anhand von Kontrollmessungen konnte festgestellt werden, dass für die tatsächliche Temperatur $T_{sz}$ des Werkzeuges

$T_{sz} = 0{,}5\,k + (T_a + T_b)$, gilt, wobei

der Wert von k in Abhängigkeit von der Aussentemperatur zwischen 0,94 und 1,1 liegt.

Der Mittelwertbildner 22 bestimmt die simulierte Temperatur $T_{sz}$ des Werkzeuges anhand dieser Gleichung, wobei er den Wert von k aus dem Signal des Temperaturfühlers 23 herleitet. In Abhängigkeit davon, ob die Temperatur $T_{sz}$ niedriger oder höher als die Referenzsignaltemperatur $T_j$ ist, nimmt das Ausgangssignal des Differenzbildners 24 ein positives oder negatives Vorzeichen an, während die Grösse diese Ausgangssignales von der Grösse des Unterschiedes abhängt. Sollte dieses Ausgangssignal ein negatives Vorzeichen aufweisen, d.h. das Werkzeug hat die gewünschte Temperatur noch nicht erreicht, ist eine Heizung erforderlich und der den Heizkörper 18 steuernde Zweig stezt sich in Betrieb. Während des Betriebes erscheint bei der Integration des Fehlersignales ein in der Zeit zu der Differenz proportional ansteigender Sägezahnimpuls, wenn dieser einen den Schwellenwert des Komparators 26 bestimmenden Referenzwert erreicht, schaltet die monostabile Kippschaltung 27 für eine vorgegebene Zeitdauer die Heizung des Heizkörpers 18 ein. Im Falle eines grössen Differenzsignales erhält die monostabile Kippschaltung 27 noch vor der Rückkippung einen neuen Steuerimpuls, wodurch eine ständige Heizung erreicht wird. Neben der richtigen Auswahl der Zeitkonstante und der Schwellenwerte kannn die Regelung bei den niedrigeren Werten der Differenzwerte äusserst wirksam gestaltet werden.

Sollte die Temperatur des Werkzeuges über dem eingestellten Wert liegen, wechselt das Ausgangssignal des Differenzbildners 24 sein Vorzeichen, der Heizungszweig schaltet sich ab und durch vollkommen ähnliche Regelung tritt der Ventilator 21 in Betrieb. Der intensive Wärmetausch verringert die Temperatur des zirkulierenden Öls - schnell und leitet die überflüssige Wärmemenge aus dem Werkzeug ab.

Die vorliegende und hier dargestellte Lösung ist zwar in erster Linie eine Doppelkreisausführung, bei Werkzeugen mit mehr als zwei Heizungs- Kühlungs-Kreisen können jedoch auch mehrere erfindungsgemässe Vorrichtungen angeschlossen werden, bzw. die Vorrichtung kann anhand der hier an geführten Erläuterungen als eine mit mehr als zwei Kreisen ausgebildet werden.

Von grosser Bedeutung ist, dass nur das Referenzsignal des einen Regelungskreises frei eingestellt werden kann. Der Referenzsignalgeber 13 des anderen Kreises erhält bereits von dem Referenzsignalgeber 14 des ersten Kreises sein Referenzsignal, relativ dazu kann er nur in vorgegebenen Grenzen Veränderungen durchführen. Wurde zum Beispiel an dem Referenzsignalgeber 14 eine Temperatur von 80°C eingestellt, lässt die ±20°C -Skala des Referenzsignalgebers 13 die Temperatur des anderen Kreises nur in den Grenzen von 60 und 80°C einstellen. Dadurch wird vermieden, dass sich in dem Werkzeug gefährlich hohe Temperaturunterschiede ausbilden, wodurch gleichzeitig die Auswahl solcher Technologien ermöglicht wird, die Temperaturunterschiede mit vorgegebener Grösse erfordern. Das Steuerreferenzsignal des Referenzsignalgebers 14 kann neben dem Referenzsignalgeber 13 an weitere Referenzsignalgeber abgezweigt werden, das weist auf die Möglichkeit des Anschlusses weiterer Kreise hin.

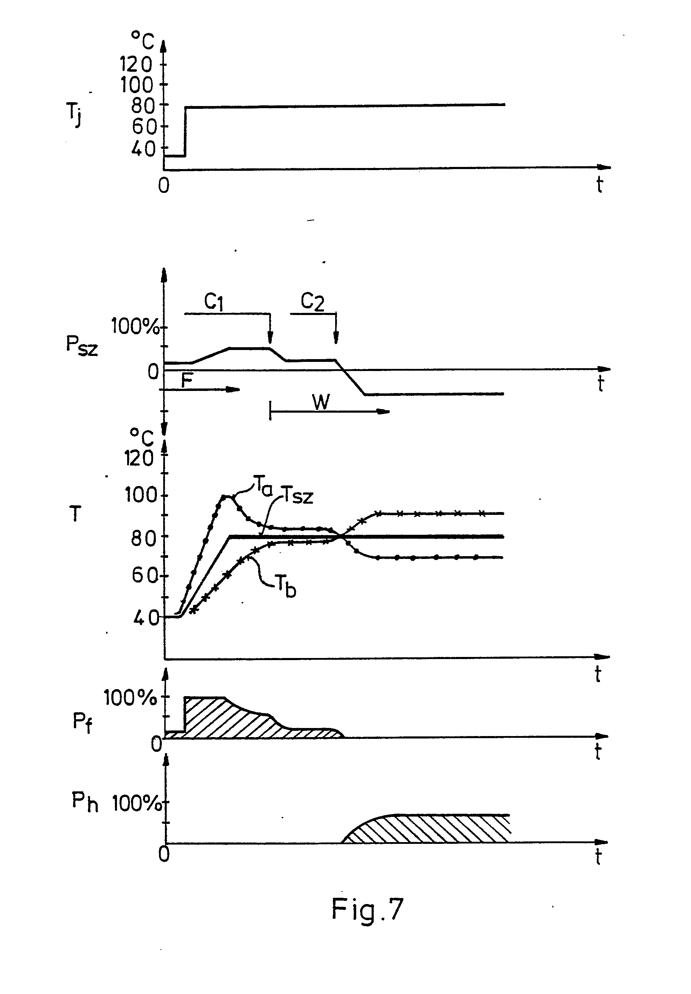

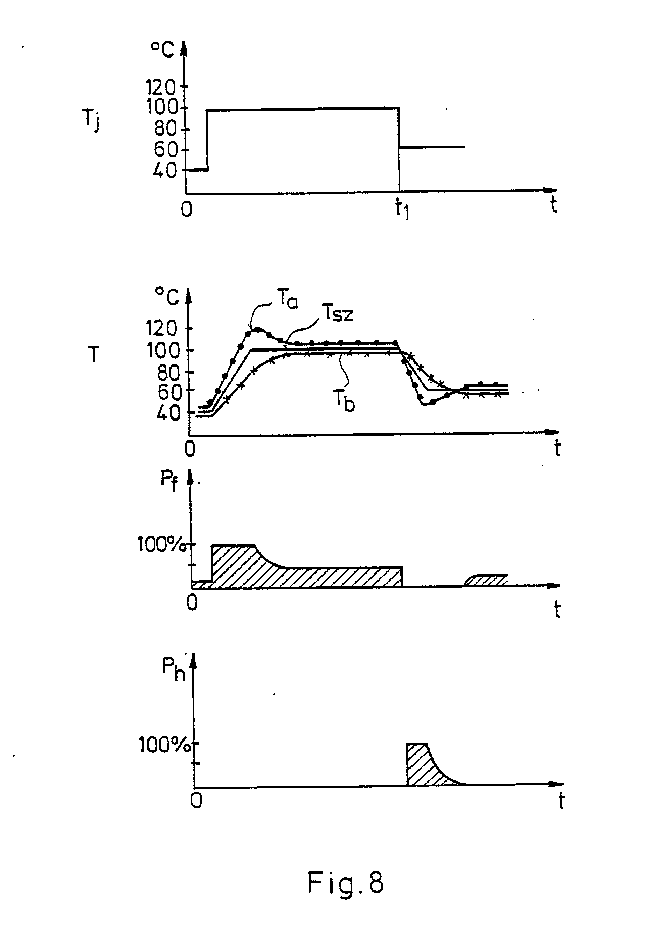

Die sich während des Betriebes ausbildenden Verhältnisse werden anhand der Diagramme in den Fig. 7 und 8 näher erläutert. Die unabhängige Variable der Fig. 7 ist die Zeitachse. Zu Beginn wird im Falle eines kalten Werkzeuges das Referenzsignal $T_j$ auf 80°C eingestellt. Daraufhin - schaltet sich der Heizkörper 18 ein und die Temperaturen $T_a$ und $T_b$ verändern sich gemäss der Figur. Die Eigenheit der Regelung besteht darin, dass die Temperatur $T_a$ den Wert $T_j$ stark überschreitet, somit erwärmt sich das Werkzeug in verhältnismässig kurzer Zeit. Das Werkzeug nimmt die Temperatur $T_{sz} = T_j$ an und hält diese. Der beständige Zustand stellt sich erst viel später ein, das Werkzeug ist jedoch sofort verwendbar, so wie die Temperatur $T_{sz}$ den eingestellten Wert von 80°C erreicht. Dieser Umstand wird von einem an den Differenzbildner 24 angeschlossenen Anzeiger angezeigt. In der Figur ist weiterhin der Verlauf der Heizleistung $P_f$ veranschaulicht. Die Heizung funktioniert in der Anfangsperiode mit 100 %-iger Leistung, danach fällt sie ab und nimmt einen immer weiter fallenden Wert ein. Die Kurve $P_{sz}$ zeigt die Wärmeaufnahme bzw. Wärmeabgabe des Werkzeuges, was infolge der verschiedenen Verluste nicht mit den Kurven der Heizleistung $P_f$ und der Kühlleistung $P_h$ übereinstimmt. Der an der Kurve $P_{sz}$ angeführte Pfeil $C_1$ zeigt eine lange Zyklusdauer, während der Pfeil $C_2$ eine kurze Zyklusdauer veranschaulicht. Der Pfeil F kennzeichnet die Aufheizung und der Pfeil W gibt die Betriebsperiode (Spritzgiessen) an. Ist während des Spritzgiessens die von den Arbeitsstücken eingeführte Wärmemenge grösser als die natürliche Wärmeabgabe des Werkzeuges, ist zur Einhaltung der eingestellten Temperatur ein Wärmeentzug erforderlich. Nach der Anfangsperiode des Spritzgiessens wechseln die Temperaturen $T_a$ und $T_b$ im Verhältnis zur Temperatur $T_j = T_{sz}$ das Vorzeichen und die Kühlung setzt sich in Gang. Die Verhältnisse der Kühlung und der Verlauf der Kühlleistung $P_h$ können anhand von Fig. 7 verfolgt werden. Die Temperaturdifferenz $T_a$ -$T_b$ ist proportional zur Wärmeabzugsmenge. In Fig. 7 zeigt die Dicke des Diagramms $T_{sz}$ den Aenderungsbereich der Temperatur des Werkzeuges. Die Regelung ist derart effektiv, dass sich die Temperatur des Werkzeuges höchstens um ±2°C ändert, sogar während der die grösste Wärmebelastung bedeutenden Spritzgiessoperation.

In Fig. 8 sind ähnliche Diagramme wie in Fig. 7 veranschaulicht, hier ist der Wärmebedarf des Werkzeuges konstant. Die Besonderheit der Kurve besteht darin, dass in dem Zeitpunkt $T_1$ das Referenzsignal $T_j$ von dem Anfangswert von 100°C auf 65°C verringert wurde. Es ist dabei ersichtlich, dass infolge der intensiven Kühlung nach einem zur Aufheizung ähnlichen Übergang die Temperatur $T_{sz}$ sehr schnell den neuen gewünschten Wert annimmt.

Bei Anwendung der erfindungsgemässen Lösung kann die gewünschte Temperatur ohne Verwendung von in das Werkzeug einzusetzenden Temperaturfühlern schnell erreicht und gehalten werden, die Aufheizung erfolgt in wesentlich kürzer Zeit, da zugelassen wird, dass die Temperatur des Heizöles über der gewünschten Temperatur des Werkzeuges liegt und die Temperaturhaltung während der Regelung eine äusserst geringe Toleranz aufweist.

**Ansprüche**

1. Vorrichtung zum Einstellen der Temperatur von Geräten, insbesondere Werkzeugen durch Zirkulation einer wärmeübertragenden Flüssigkeit, wobei die Vorrichtung einen die Flüssigkeit speichernden Behälter, einen mit der Flüssigkeit in Berührung stehenden Heizkörper, eine die Flüssigkeit über einen Kanal des Gerätes zirkulieren lassende Pumpe, einen die Temperatur der Flüssigkeit messenden Temperaturfühler, sowie eine in die Stromversorgung des Heizkörpers eingreifende und mit dem Temperaturfühler und mit einem die gewünschte Temperatur bestimmenden Referenzsignalgeber in Verbindung stehende Temperaturregelungseinheit, sowie eine die Kühlung des Gerätes sichernde Konstruktionseinheit aufweist, wobei der Referenzsignalgeber mit einem Eingang eines Differenzbildners verbunden ist, dadurch gekennzeichnet, dass in einen die Flüssigkeit zirkulieren lassenden geschlossenen Strömungskreis ein Wärmetauscher (20) eingefügt ist, der mit einem Ventilator (21) in Verbindung steht, dass zwei gesonderte Temperaturfühler (9, 10) zur Detektierung der austretenden und zurückkehrenden Flüssigkeit vorgesehen sind, dass weiterhin in der Temperaturregelungseinheit ein aus den Signalen der beiden Temperaturfühler (9, 10) die Temperatur des Gerätes simulierender Mittelwertbildner (22) vorgesehen ist, dessen Ausgang an dem anderen Eingang des Differenzbildners (24) angeschlossen ist, während der Ausgang des Differenzbildners (24) über einen Regelungszweig mit dem Ventilator (21) verbunden ist.

2. Vorrichtung nach Anspruch 1, dadurch gekennzeichnet, dass der Wärmetauscher (20) für waagerechte Strömungsrichtung ausgebildet ist und mit eine vertikale Luftströmung behindernden waagerechten Lamellen (44) versehen ist.

3. Vorrichtung nach Anspruch 1 oder 2, dadurch gekennzeichnet, dass eine Seite des Wärmetauschers (20) mit einem sich nach oben erweiternden, oben offenen Trichter (45) und die andere Seite des Wärmetauschers (20) mit einem eine waagerechte Luftströmung erzeugenden Ventilator (21) in Verbindung stehen.

4. Vorrichtung nach einem der Ansprüche 1 bis 3, dadurch gekennzeichnet, dass der eine Eingang des Mittelwertbildners (22) mit einem die Umgebungstemperatur des Gerätes messenden Temperaturfühler (23) in Verbindung ist.

5. Vorrichtung nach einem der Ansprüche 1 bis 4, dadurch gekennzeichnet, dass in der Regelungseinheit (16) der Ausgang des Differenzbildners (24) an zwei zu dem Differenzsignal proportionale Impulse erzeugende Zweige angeschlossen ist, die jeweils auf entgegengesetzte Vorzeichen der Ausgangssignale des Differenzbildners (24) ansprechen, wobei der eine Zweig mit der Schaltung des Heizkörpers (18) und der andere Zweig mit der Schaltung des Ventilators (21) in Verbindung sind.

6. Vorrichtung nach Anspruch 5, dadurch gekennzeichnet, dass in jedem Zweig ein Integrator (25, 30), ein an dem Ausgang des Integrators (25, 30) angeschlossener Komparator (26, 31), eine mit diesem gesteuerte monostabile Kippschaltung (27, 32) und ein mit dem Ausgang der zuletzt genannten mit seinem Eingang verbundener gesteuerter Schalter (28, 33) vorgesehen sind.

7. Vorrichtung nach Anspruch 6, dadurch gekennzeichnet, dass der die monostabile Kippschaltung (32) mit einer mit dem Nulldurchgang der Netzspannung synchronisierenden Schaltung geschaltet ist.

8. Vorrichtung nach einem der Ansprüche 1 bis 7, dadurch gekennzeichnet, dass in einem gemeinsamen Konstruktionsgehäuse (35) mehrere Heizungs-Kühlungs-Einheiten (11, 12) und jeweils eine diesen zugeordnete Regelungseinheit (15, 16) angeordnet sind.

9. Vorrichtung nach Anspruch 8, dadurch gekennzeichnet, dass einer der Regelungseinheiten (15, 16) ein frei einstellbarer Referenzsignalgeber (14) zugeordnet ist, während der weiteren Regelungseinheit (15) oder den weiteren Regelungseinheiten ein nur in einem vorgegebenen Bereich im Verhältnis zu dem Referenzsignal des genannten Referenzsignalgebers (14) einstellbarer anderer Referenzsignalgeber (13) zugeordnet ist.

10. Vorrichtung nach Anspruch 8 oder 9, dadurch gekennzeichnet, dass die Heizungs-Kühlungs-Einheiten (11, 12) nebeneinander derart angeordnet sind, dass der Flüssigkeitsbehälter, vorzugsweise Ölbehälter (17) unten und der Wärmetauscher (20) darüber angeordnet sind.

Fig.1

Fig. 2

0 245 827

0 245 827

35

3

4

5

6

12

17

11

36

Fig.4

38

39    21

40

37    19

Fig.3

Fig.5

Fig.6

Fig.7

Fig.8